# EUROPÄISCHE PATENTANMELDUNG

(11) **EP 3 648 328 A1**
(43) Veröffentlichungstag der Anmeldung: **06.05.2020**
(21) Anmeldenummer: 19206892.2
(22) Anmeldetag: 04.11.2019
(51) Int. Cl.: H02M 3/337, H02M 7/483, H02M 7/797, H02M 7/155, B60L 50/51, B60L 53/10, B60L 53/22, B60L 53/24, B60L 50/53, B60L 50/60, B60L 53/20, H02J 3/18, H02J 7/02, H02P 27/08, H02M 1/00

(54) **STROMRICHTERANORDNUNG FÜR EIN FAHRZEUG UND FAHRZEUG MIT EINER SOLCHEN STROMRICHTERANORDNUNG**

(30) Priorität: 05.11.2018 DE 102018218824
(71) Anmelder: Volkswagen Aktiengesellschaft, 38436 Wolfsburg (DE)
(72) Erfinder: Kusch, Rüdiger, 38436 WOLFSBURG (DE)
(74) Vertreter: Patentanwälte Bressel und Partner mbB

(57) **Zusammenfassung**

Die Erfindung betrifft eine Stromrichteranordnung (1) für ein Fahrzeug, wobei die Stromrichteranordnung (1) auf einer Eingangsseite (6) einen Gleichstrom bereitgestellt bekommt, umfassend mindestens einen Wechselrichter (2) zum Betreiben einer elektrischen Maschine (20) und mindestens einen Gleichspannungswandler (3) zum Betreiben eines Energiespeichers (21), wobei die Stromrichteranordnung (1) ferner mindestens einen Gleichrichter (4) und Schaltmittel (5) umfasst, wobei eine Ausgangsseite (7) des mindestens eine Gleichrichters (4) mit dem Energiespeicher (21) elektrisch verbunden ist, und wobei die Schaltmittel (5) derart ausgebildet und angeordnet sind, dass eine Ausgangsseite (8) des mindestens einen Wechselrichters (2) mit einer Eingangsseite (9) des mindestens einen Gleichrichters (4) elektrisch verbunden werden kann. Ferner betrifft die Erfindung ein Fahrzeug mit einer solchen Stromrichteranordnung (1).

## Beschreibung

Die Erfindung betrifft eine Stromrichteranordnung für ein Fahrzeug und ein Fahrzeug mit einer solchen Stromrichteranordnung.

Stromrichter dienen der Umwandlung eines Stroms von einem Gleichstrom in einen Wechselstrom bzw. eines Wechselstroms in einen Gleichstrom. Auch zur Wandlung von Parametern des Stroms, wie einer Spannung und/oder einer Frequenz, werden Stromrichter eingesetzt. Häufig eingesetzte Varianten des Stromrichters sind Gleichrichter, Wechselrichter, Leistungssteller oder Umrichter. Auch bei der Steuerung und Regelung von Elektromotoren mit veränderbarer Drehzahl werden Stromrichter, beispielsweise in Form eines Vierquadrantenstellers, eingesetzt. Insbesondere in elektrifizierten Fahrzeugen kommen Stromrichter zum Einsatz, um einen Gleichstrom in einen mehrphasigen Wechselstrom umzuwandeln.

Die Wandlung erfolgt mit Hilfe von Hochleistungshalbleitern, wobei Transistoren oder Thyristoren, insbesondere Metal Oxide Semiconductor Field-Effect Transistoren (MOSFETs), Insulated-Gate Bipolar Transistoren (IGBTs) und Integrated Gate-Commutated Thyristoren (IGCTs), zum Einsatz kommen. Diese Schaltelemente werden in der Regel binär betrieben und haben deshalb zwei Schaltzustände ("an" oder "aus"). Es kann jedoch auch ein "weiches" Schalten mit langsam ansteigenden Flanken vorgesehen sein. Ein Stromrichter umfasst in der Regel eine Vielzahl dieser Schaltelemente. Über das zeitliche Ansteuern der Schaltzustände dieser Schaltelemente mit Hilfe vorgegebener Pulsmuster erfolgt eine Wandlung der Ströme.

Auf dem Gebiet der Elektromobilität werden zunehmend auch Konzepte zur Elektrifizierung des Antriebsstrangs von Nutzfahrzeugen entwickelt. Hierbei ist eine zu geringe Energiedichte der verwendeten Energiespeicher jedoch ein Problem. Eine Lösung des Problems stellt das Bereitstellen von elektrischer Energie von außen über ein Oberleitungssystem oder über ein kabelloses, induktiv arbeitendes System dar. Hierbei müssen jedoch große Energiemengen von der Oberleitung bzw. dem induktiven System in das Fahrzeug transportiert werden, was zu entsprechenden Anforderungen bei der Auslegung und Dimensionierung der Bauelemente der verwendeten Stromrichter führt.

Der Erfindung liegt das technische Problem zu Grunde, eine Stromrichteranordnung für ein Fahrzeug und ein Fahrzeug mit einer solchen Stromrichteranordnung zu schaffen, bei denen eine Energie verbessert übertragen werden kann.

Die technische Aufgabe wird erfindungsgemäß durch eine Stromrichteranordnung mit den Merkmalen des Patentanspruchs 1 und ein Fahrzeug mit den Merkmalen des Patentanspruchs 10 gelöst. Vorteilhafte Ausgestaltungen der Erfindung ergeben sich aus den Unteransprüchen.

Insbesondere wird eine Stromrichteranordnung für ein Fahrzeug geschaffen, wobei die Stromrichteranordnung auf einer Eingangsseite einen Gleichstrom bereitgestellt bekommt, umfassend mindestens einen Wechselrichter zum Betreiben einer elektrischen Maschine und mindestens einen Gleichspannungswandler zum Betreiben eines Energiespeichers, wobei die Stromrichteranordnung ferner mindestens einen Gleichrichter und Schaltmittel umfasst, wobei eine Ausgangsseite des mindestens eine Gleichrichters mit dem Energiespeicher elektrisch verbunden ist, und wobei die Schaltmittel derart ausgebildet und angeordnet sind, dass eine Ausgangsseite des mindestens einen Wechselrichters mit einer Eingangsseite des mindestens einen Gleichrichters elektrisch verbunden werden kann.

Ferner wird ein Fahrzeug, umfassend eine solche Stromrichteranordnung, geschaffen.

Es ist eine Grundidee der Erfindung, bereits vorhandene Bauelemente der Stromrichteranordnung im Hinblick auf das Verteilen elektrischer Leistungsflüsse und ein Laden eines Energiespeichers verbessert bzw. optimal zu nutzen. Die Stromrichteranordnung umfasst mindestens einen Wechselrichter zum Betreiben einer elektrischen Maschine und mindestens einen Gleichspannungswandler zum Betreiben eines Energiespeichers. Diese arbeiten parallel: der mindestens eine Wechselrichter wandelt den beispielsweise von einer Oberleitung abgegriffenen Gleichstrom in ein Drehfeld zum Betreiben der elektrischen Maschine um. Der Wechselrichter ist beispielsweise als Leistungssteller ausgebildet. Der mindestens eine Gleichspannungswandler wandelt den bereitgestellten Gleichstrom hinsichtlich einer Spannung derart um, dass ein Energiespeicher, insbesondere eine (Hochvolt-)Batterie, hiermit geladen werden kann. Wird die elektrische Maschine nicht betrieben, so wird über den Wechselrichter keine Leistung transportiert. Die Bauelemente des Wechselrichters werden in diesem Fall hinsichtlich eines Leistungsflusses überhaupt nicht bzw. nicht optimal ausgenutzt. Erfindungsgemäß ist deshalb vorgesehen, dass die Stromrichteranordnung mindestens einen Gleichrichter und Schaltmittel umfasst. Mit Hilfe der Schaltmittel kann eine Ausgangsseite des Wechselrichters mit einer Eingangsseite des mindestens einen Gleichrichters verbunden werden. Da eine Ausgangsseite des Gleichrichters mit dem Energiespeicher elektrisch verbunden ist, kann eine elektrische Leistung nach Herstellen der elektrischen Verbindung auch über den mindestens einen Wechselrichter und den mindestens einen Gleichrichter in Richtung des Energiespeichers übertragen werden.

Der Vorteil der Erfindung ist, dass eine elektrische Leistung zusätzlich oder alternativ auch über den Wechselrichter zum Energiespeicher transportiert werden kann. Auf diese Weise steht in der Stromrichteranordnung neben dem Pfad über den Gleichspannungswandler hin zum Energiespeicher, insbesondere zur (Hochvolt-)Batterie, ein weiterer Pfad bereit, um Leistung zu übertragen und den Energiespeicher zu laden. Ein Leistungsfluss von der Eingangsseite der Stromrichteranordnung, beispielsweise von einer Oberleitung, hin zum Energiespeicher kann hierdurch insgesamt erhöht werden. Insbesondere sind die beiden genannten Pfade unabhängig voneinander und können hierdurch flexibel und individuell ausgelegt werden, eine individuelle Dimensionierung im Hinblick auf den Leistungsfluss bzw. eine maximal mögliche Leistung wird hierdurch ermöglicht. Weiter lassen sich bereits zum Betreiben der elektrischen Maschine vorhandene Bauelemente der Stromrichteranordnung verbessert nutzen. Insgesamt verringert sich hierdurch die Komplexität der Stromrichteranordnung im Fahrzeug, da trotz einer Leistungserhöhung keine zusätzlichen Bauelemente notwendig sind. Hierdurch können ein Planungsaufwand und Kosten gesenkt werden. Ferner kann ein Bauraum reduziert werden. Da ein Leistungsfluss besser verteilt werden kann, lässt sich darüber hinaus auch ein Wärmeeintrag verbessert streuen und handhaben. Insbesondere lassen sich Bereiche eines erhöhten Wärmeeintrags (sogenannte "Hotspots") verbessert vermeiden. Ferner kann der Wärmeeintrag durch das Verwenden höherer Schaltfrequenzen zusätzlich reduziert werden. Durch die Erfindung kann eine Steigerung der Lebensdauer einzelner Bauelemente sowie der Stromrichteranordnung insgesamt erreicht werden.

Der Wechselrichter ist insbesondere als Multi-Level-Wechselrichter bzw. Multi-Level-Leistungssteller ausgebildet. Der Gleichspannungswandler ist insbesondere als Multi-Level-Gleichspannungswandler ausgebildet.

Die Schaltmittel können insbesondere als einpolige oder mehrpolige Schaltschütze ausgebildet sein.

Ein Fahrzeug ist insbesondere ein schweres Nutzfahrzeug, beispielsweise ein elektrisch an einer Oberleitung betriebener Lastkraftwagen. Prinzipiell ist die Stromrichteranordnung aber auch in anderen Arten von elektrisch betriebenen Fahrzeugen, welche einen Energiespeicher aufweisen, einsetzbar.

In einer Ausführungsform ist vorgesehen, dass die Schaltmittel ferner derart ausgebildet sind, dass eine elektrische Verbindung zwischen der Ausgangsseite des mindestens einen Wechselrichters und der elektrischen Maschine unterbrochen ist, wenn die Ausgangsseite des mindestens einen Wechselrichters mit der Eingangsseite des mindestens einen Gleichrichters elektrisch verbunden ist. Hierdurch kann erreicht werden, dass der Wechselrichter vollständig für einen Leistungstransport von der Eingangsseite der Stromrichteranordnung hin zum Energiespeicher verwendet werden kann. Die elektrische Maschine ist in diesem Fall vollständig abgekoppelt.

In einer weiteren Ausführungsform ist vorgesehen, dass der mindestens eine Gleichrichter einen Resonanzwandler umfasst. Hierdurch können auch einander überlappende Spannungen auf der Eingangsseite der Stromrichteranordnung und des Energiespeicher, insbesondere der (Hochvolt-)Batterie, verbessert gehandhabt werden. Im Gegensatz zu beispielsweise Buck-Boost-Convertern stellen überlappende Spannungen für Resonanzwandler kein Problem dar. Das Anwendungsfeld der Stromrichteranordnung kann hierdurch flexibel und weitgehend unabhängig von der Spannung auf der Eingangsseite der Stromrichteranordnung bzw. der Spannung des Energiespeichers gewählt werden.

In einer Ausführungsform ist vorgesehen, dass der mindestens eine Gleichrichter Mittel für eine galvanische Trennung zwischen der Eingangsseite und der Ausgangseite umfasst. Dies kann beispielsweise ein Transformator, insbesondere ein Hochfrequenztransformator, sein. Umfasst der mindestens eine Gleichrichter einen Resonanzwandler, so kann der Resonanzwandler einen Transformator, insbesondere einen Hochfrequenztransformator, zur galvanischen Trennung umfassen. Der Vorteil ist, dass Sicherheitsvorgaben in Bezug auf eine elektrische Isolation flexibler gehandhabt werden können. Gefordert ist in der Regel eine doppelte elektrische Isolation für eine Fahrzeug-Bezugsmasse. Ist jedoch eine galvanische Trennung vorhanden, kann unter Umständen eine einfache elektrische Isolation bereits als ausreichend erachtet werden. In diesem Falle können Aufwand und Kosten eingespart werden. Ferner kann bei entsprechender Auslegung und Verwendung beispielsweise eines wassergekühlten Hochfrequenztransformators ein Schnellladen des Energiespeichers mit hoher Ladeleistung erfolgen.

In einer weiteren Ausführungsform umfasst die Stromrichteranordnung eine Steuerung, wobei die Steuerung derart ausgebildet ist, die Schaltmittel ansteuern zu können und die elektrische Verbindung zwischen der Ausgangsseite des mindestens einen Wechselrichters und der Eingangsseite des mindestens einen Gleichrichters in Abhängigkeit einer Schaltbedingung öffnen und schließen zu können. Hierdurch kann der zweite elektrische Pfad gesteuert hinzu- und hinweggeschaltet werden. Die Steuerung kann auch in einer Steuerung des mindestens einen Wechselrichters, des mindestens einen Gleichspannungswandlers oder des mindestens einen Gleichrichters oder einer kombinierten bzw. gemeinsamen Steuerung ausgebildet sein.

In einer weiterbildenden Ausführungsform ist vorgesehen, dass die Schaltbedingung auf Grundlage eines Betriebszustands der elektrischen Maschine und/oder eines Betriebszustands des Fahrzeugs festgelegt ist. Ein solcher Betriebszustand der elektrischen Maschine kann beispielsweise ein Stillstand oder ein Betrieb mit einer vorgegebenen Drehzahl oder Leistung sein. Ein Betriebszustand des Fahrzeugs kann beispielsweise ein Stillstand des Fahrzeugs oder ein Fahren des Fahrzeugs mit einer vorgegebenen Geschwindigkeit sein. Beispielsweise kann vorgesehen sein, dass als Schaltbedingung für das Verbinden der elektrischen Verbindung zwischen dem mindestens einen Wechselrichter und dem mindestens einen Gleichrichter ein vollständiger Stillstand des Fahrzeugs vorliegen muss. Eine beispielsweise von einer Oberleitung abgegriffene elektrische Leistung wird bei Stillstand des Fahrzeugs nicht mehr zur elektrischen Maschine übertragen, sodass die Bauelemente des Wechselrichters ungenutzt sind. Bei Stillstand ist die vorgenannte Schaltbedingung erfüllt und die Schaltmittel, beispielsweise die Schaltschütze, stellen eine elektrische Verbindung zwischen der Ausgangsseite des mindestens einen Wechselrichters und der Eingangsseite des mindestens einen Gleichrichters her. Zusätzlich ist insbesondere vorgesehen, dass eine elektrische Verbindung von der Ausgangsseite des mindestens einen Wechselrichters zu der elektrischen Maschine getrennt wird. Anschließend wird der mindestens eine Wechselrichter weiterbetrieben bzw. entsprechend angesteuert, sodass elektrische Leistung über den mindestens einen Wechselrichter an den mindestens einen Gleichrichter und den Energiespeicher übertragen wird. Vor einem Anfahren des Fahrzeugs wird die elektrische Verbindung zwischen der Ausgangsseite des mindestens einen Wechselrichters und der Eingangsseite des mindestens einen Gleichrichters mittels der Schaltmittel, insbesondere der Schaltschütze, wieder unterbrochen. Gleichzeitig wird gegebenenfalls eine elektrische Verbindung zwischen der Ausgangsseite des mindestens einen Wechselrichters und der elektrischen Maschine wiederhergestellt. Durch Ansteuern der elektrischen Maschine kann das Fahrzeug dann wieder anfahren, indem Leistung von der Eingangsseite der Stromrichteranordnung hin zu der elektrischen Maschine übertragen wird.

In einer weiteren Ausführungsform ist vorgesehen, dass die Stromrichteranordnung weitere Schaltmittel zwischen dem Gleichspannungswandler und dem Energiespeicher umfasst, wobei die weiteren Schaltmittel derart ausgebildet und angeordnet sind, dass eine elektrische Verbindung zwischen dem mindestens einen Gleichspannungswandler und dem Energiespeicher geöffnet und geschlossen werden kann. Dies ist insbesondere von Vorteil, wenn gezielt eine galvanische Trennung angestrebt wird. In diesem Fall kann das weitere Schaltmittel geöffnet und die nicht galvanisch getrennte elektrische Verbindung zwischen dem mindestens einen Spannungswandler und dem Energiespeicher unterbrochen werden.

In einer weiterbildenden Ausführungsform ist vorgesehen, dass die Steuerung ferner derart ausgebildet ist, die weiteren Schaltmittel ansteuern zu können und die elektrische Verbindung zwischen dem mindestens einen Gleichspannungswandler und dem Energiespeicher in Abhängigkeit der Schaltbedingung oder einer weiteren Schaltbedingung öffnen und schließen zu können. Insbesondere kann vorgesehen sein, dass die elektrische Verbindung zwischen dem mindestens einen Gleichspannungswandler und dem Energiespeicher mittels der weiteren Schaltmittel unterbrochen wird, wenn sich das Fahrzeug im Stillstand befindet. Gleichzeitig wird die elektrische Verbindung zum Gleichrichter mittels der Schaltmittel hergestellt. Umfasst der Gleichrichter Mittel für eine galvanische Trennung, so kann der Energiespeicher bei Stillstand des Fahrzeugs galvanisch getrennt von der Eingangsseite der Stromrichteranordnung geladen werden. Dieses Vorgehen kann Vorgaben bei der Isolation der Fahrzeugs-Bezugsmasse verringern, wodurch Aufwand und Kosten eingespart werden können. Insbesondere kann hierdurch ein flexibles Einstellen bzw. Auswählen sowohl eines galvanisch nicht getrennten als auch eines galvanisch getrennten Pfades zum Laden des Energiespeichers erfolgen.

In einer weiteren Ausführungsform ist vorgesehen, dass Elemente des mindestens einen Wechselrichters, des mindestens einen Gleichspannungswandlers und des mindestens einen Gleichrichters derart ausgewählt und/oder dimensioniert sind und/oder eine Ansteuerung dieser Bauelemente derart gewählt ist, dass ein Wärmeeintrag in der Stromrichteranordnung und/oder eine Lebensdauer der Stromrichteranordnung optimiert ist. Bauelemente sollen hierbei insbesondere elektrische Bauelemente sein, wie beispielsweise Leistungstransistoren. In Abhängigkeit der einzelnen Lastszenarien in unterschiedlichen Betriebszuständen des Fahrzeugs wird hierbei insbesondere angestrebt, in allen Betriebszuständen einen Leistungsfluss auf möglichst viele Bauelemente zu verteilen, sodass der Leistungsfluss über jedes einzelne Bauelement der Stromrichteranordnung verringert werden kann. Hierdurch kann ein Wärmeeintrag pro Bauelement verringert und eine Lebensdauer der Bauelemente sowie der Stromrichteranordnung insgesamt erhöht werden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Stromrichteranordnung für ein Fahrzeug;
- Fig. 2: eine schematische Darstellung einer weiteren Ausführungsform der Stromrichteranordnung für ein Fahrzeug;
- Fig. 3: eine schematische Darstellung einer weiteren Ausführungsform der Stromrichteranordnung für ein Fahrzeug.

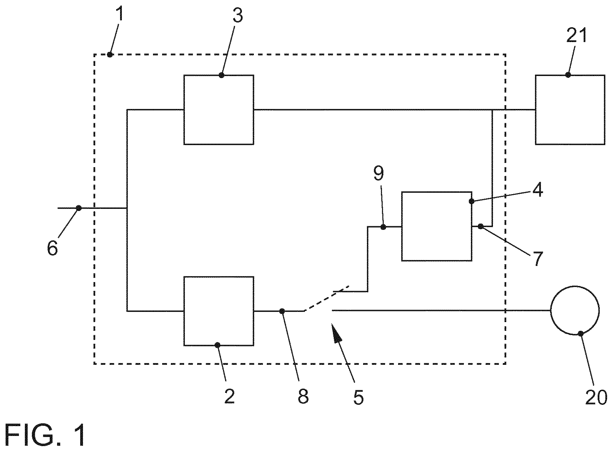

In Fig. 1 ist eine schematische Darstellung einer Ausführungsform der Stromrichteranordnung 1 für ein Fahrzeug gezeigt. Die Stromrichteranordnung 1 umfasst einen Wechselrichter 2 zum Betreiben einer elektrischen Maschine 20 und einen Gleichspannungswandler 3 zum Betreiben eines Energiespeichers 21. Ferner umfasst die Stromrichteranordnung 1 einen Gleichrichter 4 und Schaltmittel 5. Der Stromrichteranordnung 1 wird auf einer Eingangsseite 6 ein Gleichstrom bzw. eine Gleichspannung bereitgestellt, der/die beispielsweise von einer Oberleitung mittels eines Pantographen abgegriffen wird.

Eine Ausgangsseite 7 des Gleichrichters 4 ist mit dem Energiespeicher 21 elektrisch verbunden. Die Schaltmittel 5, welche beispielsweise als Schaltschütz(e) ausgebildet sind, sind derart ausgebildet und angeordnet, dass eine Ausgangsseite 8 des Wechselrichters 2 mit einer Eingangsseite 9 des Gleichrichters 4 elektrisch verbunden werden kann.

Im gezeigten Ausführungsbeispiel ist vorgesehen, dass die Schaltmittel 5 ferner derart ausgebildet sind, dass eine elektrische Verbindung zwischen der Ausgangsseite 8 des Wechselrichters 2 und der elektrischen Maschine 21 unterbrochen ist, wenn die Ausgangsseite 8 des mindestens einen Wechselrichters 2 mit der Eingangsseite 9 des mindestens einen Gleichrichters 4 elektrisch verbunden ist. Dies muss jedoch nicht zwingend der Fall sein.

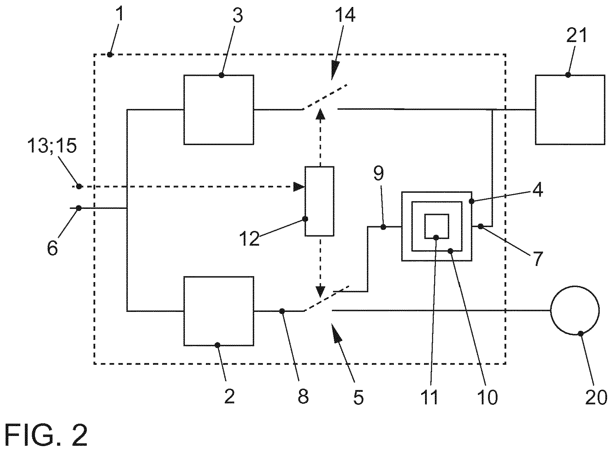

In Fig. 2 ist eine schematische Darstellung einer weiteren Ausführungsform der Stromrichteranordnung 1 für ein Fahrzeug gezeigt. Die Ausführungsform ist vom Prinzip her gleich aufgebaut wie die in Fig. 1 gezeigte Ausführungsform, wobei gleiche Bezugszeichen gleiche Merkmale bezeichnen sollen.

Es kann vorgesehen sein, dass der Gleichrichter 4 einen Resonanzwandler 10 umfasst.

Es kann ferner vorgesehen sein, dass der Gleichrichter 4 Mittel 11 für eine galvanische Trennung zwischen der Eingangsseite 9 und der Ausgangseite 7 umfasst. Die Mittel 11 können beispielsweise als Transformator, insbesondere als Hochfrequenztransformator, ausgebildet sein.

Ferner kann die Stromrichteranordnung 1 eine Steuerung 12 umfassen, wobei die Steuerung 12 derart ausgebildet ist, die Schaltmittel 5 ansteuern zu können und die elektrische Verbindung zwischen der Ausgangsseite 8 des Wechselrichters 2 und der Eingangsseite 9 des Gleichrichters 4 in Abhängigkeit einer Schaltbedingung 13 öffnen und schließen zu können.

Es kann in einer Weiterbildung vorgesehen sein, dass die Schaltbedingung 13 auf Grundlage eines Betriebszustands der elektrischen Maschine 20 und/oder eines Betriebszustands des Fahrzeugs festgelegt ist. Beispielsweise kann eine elektrische Verbindung hergestellt werden, sofern das Fahrzeug sich im Stillstand befindet.

Es können weitere Schaltmittel 14 zwischen dem Gleichspannungswandler 3 und dem Energiespeicher 21 vorgesehen sein, wobei die weiteren Schaltmittel 14 derart ausgebildet und angeordnet sind, dass eine elektrische Verbindung zwischen dem mindestens einen Gleichspannungswandler 3 und dem Energiespeicher 21 geöffnet und geschlossen werden kann.

Es kann auch vorgesehen sein, dass die Steuerung 12 ferner derart ausgebildet ist, die weiteren Schaltmittel 14 ansteuern zu können und die elektrische Verbindung zwischen dem mindestens einen Gleichspannungswandler 3 und dem Energiespeicher 21 in Abhängigkeit der Schaltbedingung 13 oder einer weiteren Schaltbedingung 15 öffnen und schließen zu können.

Darüber hinaus kann vorgesehen sein, dass Bauelemente des Wechselrichters 2, des Gleichspannungswandlers 3 und des Gleichrichters 2 derart ausgewählt und/oder dimensioniert sind und/oder eine Ansteuerung dieser Bauelemente derart gewählt ist, dass ein Wärmeeintrag in der Stromrichteranordnung 1 und/oder eine Lebensdauer der Stromrichteranordnung 1 optimiert ist.

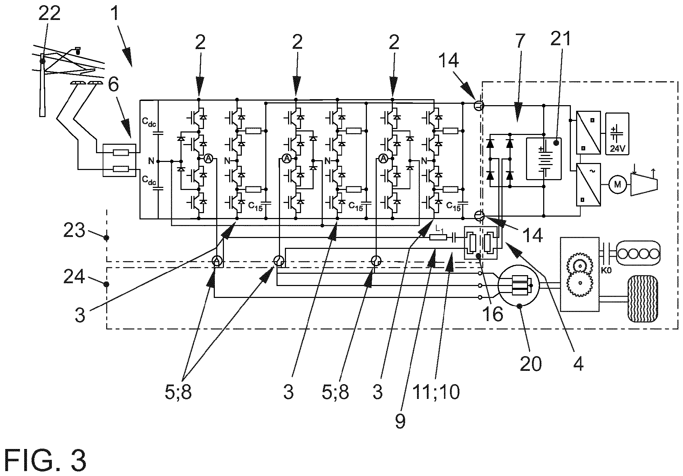

In Fig. 3 ist eine schematische Darstellung einer weiteren Ausführungsform der Stromrichteranordnung 1 für ein Fahrzeug in einem konkreten Anwendungsszenario gezeigt, wobei das Fahrzeug ein Nutzfahrzeug sein soll, welches elektrische Energie über eine Oberleitung 22 bezieht. Die Ausführungsform ist vom Prinzip her gleich aufgebaut wie die in Fig. 1 gezeigte Ausführungsform, wobei gleiche Bezugszeichen gleiche Merkmale bezeichnen sollen. Der Wechselrichter 2 und der Gleichspannungswandler 3 sind hierbei als Multi-Level-Gleichrichter bzw. als Multi-Level-Umrichter in einer Doppel-H-Brückenanordnung ausgebildet, eine Ansteuerung der einzelnen Bauelemente, insbesondere der Leistungstransistoren, des Multi-Level-Gleichrichters und des Multi-Level-Umrichters ist prinzipiell bekannt und wird hier nicht weiter erläutert.

Der Gleichrichter 4 umfasst einen Resonanzwandler 10, der als Mittel 11 zur galvanischen Trennung einen Hochfrequenz-Transformator 16 aufweist.

Die Schaltmittel 5, welche als Schaltschütze ausgebildet sind, sind derart angeordnet und verschaltet, dass eine elektrische Verbindung zwischen zwei von drei Phasen an der Ausgangsseite des Wechselrichters 2 und dem Gleichrichter 4 hergestellt werden kann. Gleichzeitig werden alle drei Phasen von der elektrischen Maschine getrennt.

Befindet sich das Fahrzeug im Stillstand, so kann die elektrische Verbindung zu der elektrischen Maschine 20 getrennt werden. Gleichzeitig wird eine elektrische Verbindung zwischen dem Wechselrichter 2 und dem Gleichrichter 4 hergestellt. Eine von der Oberleitung 22 abgegriffene elektrische Leistung kann nun zusätzlich zu dem Pfad über den Gleichspannungswandler 3 auch über den aus dem Wechselrichter 2 und dem Gleichrichter 4 gebildeten Pfad zum Energiespeicher 21 übertragen werden. Hierdurch können die bereits vorhandenen Bauelemente des Wechselrichters 2, welche bei Stillstand des Fahrzeugs ansonsten ungenutzt bleiben würden, auch während des Stillstands des Fahrzeugs zum Laden des Energiespeichers 21 genutzt werden. Insgesamt kann hierdurch eine Ladeleistung erhöht werden, da sowohl über den Gleichstrompfad als auch über den zusätzlichen Pfad geladen werden kann. Dies kann den Wärmeeintrag pro Bauelement der Stromrichteranordnung 1 verringern und in der Folge eine Lebensdauer der einzelnen Bauelemente bzw. der Stromrichteranordnung 1 insgesamt erhöhen.

Durch die galvanische Trennung können ferner Isolationsbarrieren 23 flexibler bzw. lediglich in einfacher Ausführung ausgestaltet werden, da je nach Vorgaben bei Vorhandensein einer galvanischen Trennung unter Umständen bereits eine einzige Isolationsbarriere für eine Fahrzeug-Bezugsmasse 24 als ausreichend erachtet wird. Hierdurch können ein Aufwand und Kosten weiter reduziert werden.

### Bezugszeichenliste

- 1: Stromrichteranordnung
- 2: Wechselrichter
- 3: Gleichspannungswandler
- 4: Gleichrichter
- 5: Schaltmittel
- 6: Eingangsseite
- 7: Ausgangsseite
- 8: Ausgangsseite
- 9: Eingangsseite
- 10: Resonanzwandler
- 11: Mittel zur galvanischen Trennung
- 12: Steuerung
- 13: Schaltbedingung
- 14: weitere Schaltmittel
- 15: weitere Schaltbedingung
- 16: Transformator
- 20: elektrische Maschine
- 21: Energiespeicher
- 22: Oberleitung
- 23: Isolationsbarriere
- 24: Fahrzeugs-Bezugsmasse

## Patentansprüche

1. Stromrichteranordnung (1) für ein Fahrzeug, wobei die Stromrichteranordnung (1) auf einer Eingangsseite (6) einen Gleichstrom bereitgestellt bekommt, umfassend:
mindestens einen Wechselrichter (2) zum Betreiben einer elektrischen Maschine (20) und mindestens einen Gleichspannungswandler (3) zum Betreiben eines Energiespeichers (21),
wobei die Stromrichteranordnung (1) ferner mindestens einen Gleichrichter (4) und Schaltmittel (5) umfasst, wobei eine Ausgangsseite (7) des mindestens eine Gleichrichters (4) mit dem Energiespeicher (21) elektrisch verbunden ist, und wobei die Schaltmittel (5) derart ausgebildet und angeordnet sind, dass eine Ausgangsseite (8) des mindestens einen Wechselrichters (2) mit einer Eingangsseite (9) des mindestens einen Gleichrichters (4) elektrisch verbunden werden kann.

2. Stromrichteranordnung (1) nach Anspruch 1, **dadurch gekennzeichnet, dass** die Schaltmittel (5) ferner derart ausgebildet sind, dass eine elektrische Verbindung zwischen der Ausgangsseite (8) des mindestens einen Wechselrichters (2) und der elektrischen Maschine (20) unterbrochen ist, wenn die Ausgangsseite (8) des mindestens einen Wechselrichters (2) mit der Eingangsseite (9) des mindestens einen Gleichrichters (4) elektrisch verbunden ist.

3. Stromrichteranordnung (1) nach Anspruch 1 oder 2, **dadurch gekennzeichnet, dass** der mindestens eine Gleichrichter (4) einen Resonanzwandler (10) umfasst.

4. Stromrichteranordnung (1) nach einem der Ansprüche 1 bis 3, **dadurch gekennzeichnet, dass** der mindestens eine Gleichrichter (4) Mittel (11) für eine galvanische Trennung zwischen der Eingangsseite (9) und der Ausgangseite (7) umfasst.

5. Stromrichteranordnung (1) nach einem der vorangegangenen Ansprüche, **gekennzeichnet durch** eine Steuerung (12), wobei die Steuerung (12) derart ausgebildet ist, die Schaltmittel (5) ansteuern zu können und die elektrische Verbindung zwischen der Ausgangsseite (8) des mindestens einen Wechselrichters (2) und der Eingangsseite (9) des mindestens einen Gleichrichters (4) in Abhängigkeit einer Schaltbedingung (13) öffnen und schließen zu können.

6. Stromrichteranordnung (1) nach Anspruch 5, **dadurch gekennzeichnet, dass** die Schaltbedingung (13) auf Grundlage eines Betriebszustands der elektrischen Maschine (20) und/oder eines Betriebszustands des Fahrzeugs festgelegt ist.

7. Stromrichteranordnung (1) nach einem der vorangegangenen Ansprüche, **gekennzeichnet durch** weitere Schaltmittel (14) zwischen dem Gleichspannungswandler (3) und dem Energiespeicher (21), wobei die weiteren Schaltmittel (14) derart ausgebildet und angeordnet sind, dass eine elektrische Verbindung zwischen dem mindestens einen Gleichspannungswandler (3) und dem Energiespeicher (21) geöffnet und geschlossen werden kann.

8. Stromrichteranordnung (1) nach Anspruch 7, **dadurch gekennzeichnet, dass** die Steuerung (12) ferner derart ausgebildet ist, die weiteren Schaltmittel (14) ansteuern zu können und die elektrische Verbindung zwischen dem mindestens einen Gleichspannungswandler (3) und dem Energiespeicher (21) in Abhängigkeit der Schaltbedingung (13) oder einer weiteren Schaltbedingung (15) öffnen und schließen zu können.

9. Stromrichteranordnung (1) nach einem der vorangegangenen Ansprüche, **dadurch gekennzeichnet, dass** Bauelemente des mindestens einen Wechselrichters (2), des mindestens einen Gleichspannungswandlers (3) und des mindestens einen Gleichrichters (4) derart ausgewählt und/oder dimensioniert sind und/oder eine Ansteuerung dieser Bauelemente derart gewählt ist, dass ein Wärmeeintrag in der Stromrichteranordnung (1) und/oder eine Lebensdauer der Stromrichteranordnung (1) optimiert ist.

10. Fahrzeug, umfassend eine Stromrichteranordnung (1) gemäß einem der vorangegangenen Ansprüche 1 bis 9.
